# DEMANDE DE BREVET EUROPEEN

(11) **EP 1 755 305 A1**
(43) Date de publication de la demande: **21.02.2007**
(21) Numéro de dépôt: 05300671.4
(22) Date de dépôt: 17.08.2005
(51) Int. Cl.: H04L 29/06, H04L 12/18, H04M 3/56

(54) **Dispositif de gestion de jonction de sessions multimedia paralleles a des sessions multimedia principales dans un reseau de communication**

(71) Demandeur: ALCATEL, 75008 Paris (FR)
(72) Inventeur: Litteaut, Jacques, 78160, Marly le Roi (FR); Coulon, Stéphane, 95810, Arronville (FR)
(74) Mandataire: Sciaux, Edmond

(57) **Abrégé**

Un dispositif (D) est dédié à la gestion de connexions de flux multimédia (D), pour un équipement (SS) d'un réseau de communication (R) impliqué dans l'établissement de sessions de communication entre des terminaux de communication (T1-T4) raccordés au réseau (R). Ce dispositif (D) comprend des moyens de gestion (MG) chargés, lorsque l'on établit une session principale de communication impliquant l'équipement (SS) et dédiée à une conférence multimédia entre au moins deux terminaux de communication dits internes (T1-T3), d'une part, d'effectuer des connexions de flux multimédia entre les terminaux internes (T1-T3), et d'autre part, en cas de tentative d'établissement d'une communication parallèle entre un terminal de communication (T4) externe à la session principale et l'un au moins des terminaux (T1-T3) internes à la session principale, d'établir chaque communication parallèle entre le terminal externe (T4) et chaque terminal interne demandé (T1-T3), afin que le terminal externe (T4) puisse échanger des flux multimédia avec l'un au moins des terminaux (T1-T3) internes à la session principale dans le cadre d'une session parallèle.

## Description

L'invention concerne le domaine des réseaux de communication, et plus précisément les sessions de communications multimédia entre des terminaux raccordés à des réseaux de communication.

Les avancées technologiques survenues dans le domaine des réseaux de communication, notamment en matière de services, permettent aujourd'hui à des terminaux de communication de s'échanger des flux (de données) multimédia, y compris lorsqu'ils participent conjointement à une session (dite principale) dans le cadre d'une conférence multimédia. Il est rappelé que les sessions de communications multimédia en mode conférence sont contrôlées par des équipements de réseau, comme par exemple des serveurs de sessions d'utilisateurs et des serveurs de conférence.

Ce fonctionnement en mode de conférence multimédia est particulièrement avantageux, puisqu'il permet à des utilisateurs distants les uns des autres de participer activement à une discussion tout en ayant la possibilité de s'échanger des documents multimédia comme s'ils étaient réunis dans un même lieu. Cependant, l'utilisateur d'un terminal impliqué dans une session principale ne peut pas être joint sur ce même terminal par l'utilisateur d'un autre terminal externe à cette session principale. Il n'est donc pas possible, d'une part, à un terminal externe de transmettre des données multimédia à l'un au moins des terminaux participant à une session principale, et d'autre part, à l'utilisateur d'un terminal externe de se joindre à une conférence objet d'une session multimédia une fois que cette conférence a commencé.

L'invention a donc pour but de remédier à tout ou partie de ces inconvénients.

Elle propose à cet effet un dispositif de gestion de connexions de flux multimédia, pour un équipement d'un réseau de communication impliqué dans l'établissement de sessions de communication entre des terminaux de communication raccordés à ce réseau.

Ce dispositif de gestion se caractérise par le fait qu'il comprend des moyens de gestion chargés, lorsqu'une session principale de communication, impliquant l'équipement de réseau et dédiée à une conférence multimédia entre au moins deux terminaux de communication dits internes, est établie, d'une part, d'effectuer des connexions de flux multimédia entre les terminaux internes, et d'autre part, lorsqu'un terminal de communication externe à la session principale tente d'établir une communication parallèle avec l'un au moins des terminaux internes à la session principale, d'établir chaque communication parallèle entre le terminal externe et chaque terminal interne demandé afin que le terminal externe puisse échanger des flux multimédia avec l'un au moins des terminaux internes à la session principale dans le cadre d'une session parallèle.

Les moyens de gestion de ce dispositif peuvent être également chargés d'effectuer une connexion de flux multimédia entre le terminal externe et l'un des terminaux internes afin que le terminal externe puisse prendre au moins partiellement le contrôle de ce terminal interne.

Par ailleurs, les moyens de gestion de ce dispositif peuvent être également chargés d'effectuer une connexion de flux multimédia entre le terminal externe et l'un au moins des terminaux internes afin qu'ils puissent partager des données représentatives de documents multimédia via ladite session parallèle.

L'invention propose également un équipement de réseau de communication, propre à participer à l'établissement de sessions de communication entre des terminaux de communication raccordés au réseau, et équipé d'un dispositif de gestion du type de celui présenté ci-avant.

Un tel équipement peut par exemple se présenter sous la forme d'un serveur de sessions d'utilisateurs ou d'un serveur de conférence.

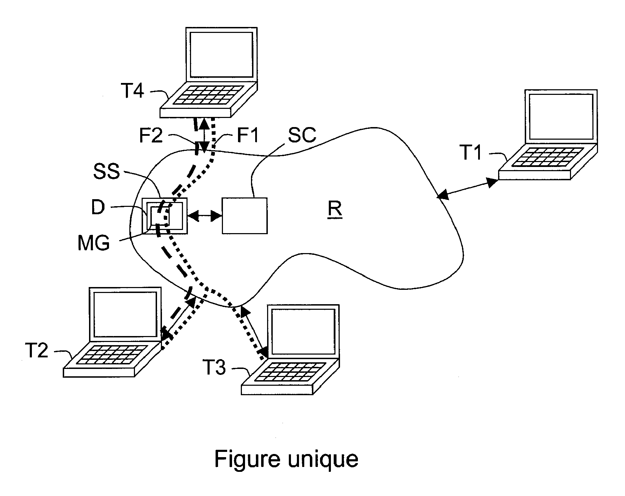

D'autres caractéristiques et avantages de l'invention apparaîtront à l'examen de la description détaillée ci-après, et du dessin annexé, sur lequel l'unique figure illustre de façon très schématique quatre terminaux de communication multimédia raccordés à un réseau équipé d'un serveur de conférence et d'un serveur de sessions d'utilisateurs comprenant un exemple de réalisation d'un dispositif de gestion selon l'invention. Le dessin annexé pourra non seulement servir à compléter l'invention, mais aussi contribuer à sa définition, le cas échéant.

L'invention a notamment pour objet de permettre à un terminal de communication, externe à une session multimédia « principale » d'une conférence à laquelle participe des terminaux de communication dits internes, d'échanger des données multimédia avec l'un au moins de ces terminaux internes.

Elle propose à cet effet, comme cela est illustré sur l'unique figure, un dispositif de gestion de connexions de flux multimédia D, destiné à être implanté dans un équipement SS d'un réseau de communication R.

Cet équipement SS est l'un des équipements de réseau qui sont impliqués dans l'établissement des sessions de communication en mode conférence entre des terminaux de communication Ti raccordés à leur réseau R. Il est rappelé que ces équipements de réseau sont le serveur de conférence SC et le serveur de sessions d'utilisateurs SS, lesquels sont couplés l'un à l'autre.

Dans l'exemple non limitatif illustré, le dispositif D est implanté dans le serveur de sessions d'utilisateurs SS. Mais, dans une variante il pourrait être implanté dans le serveur de conférence SC. Il est cependant important de noter que dans les deux cas, le dispositif D gère les sessions en conférence et pilote (contrôle) les flux multimédia.

Par ailleurs, dans l'exemple illustré, quatre terminaux (T1-T4, i = 1 à 4) ont été représentés. Mais, l'indice i peut prendre n'importe quelle valeur supérieure ou égale à trois (3).

Dans ce qui suit, on considère à titre d'exemple non limitatif que les terminaux de communication sont des ordinateurs portables équipés d'un module de communication multimédia, éventuellement de type radio (cellulaire, bluetooth, WiMAx ou WiFi, par exemple). Mais, l'invention n'est pas limitée à ce type de terminal de communication. Elle concerne en effet tout terminal de communication multimédia, fixe ou mobile, capable d'échanger des données sous la forme de signaux, avec un autre terminal de communication, via leur(s) réseau(x) de rattachement respectifs. Il pourra donc s'agir également, par exemple, de téléphones fixes ou mobiles, d'ordinateurs fixes, ou d'assistants personnels numériques (ou PDA), équipés d'un module de communication multimédia.

Par ailleurs, on considère dans ce qui suit que le réseau de communication auquel sont raccordés les terminaux Ti est un réseau fixe commuté (plus connu sous les acronymes anglais POTS (pour « Plain Old Telephone Service ») et PSTN (pour « Public Switched Telephony Network »)). Mais, l'invention n'est pas limitée à ce type de réseau de communication. Elle concerne en effet tous les types de réseau permettant l'établissement de communications multimédia en mode conférence, et notamment les réseaux cellulaires (ou mobiles) et les réseaux locaux filaires (plus connus sous l'acronyme anglais LAN (pour « Local Area Network »)) ou sans fil (plus connus sous l'acronyme anglais WLAN (pour « Wireless LAN »)).

Le dispositif de gestion D, selon l'invention, comprend un module de gestion MG, également appelé maître de session de conférence multimédia, chargé d'intervenir chaque fois qu'est établie une session de communication, dite principale, impliquant l'équipement de réseau dans lequel il est implanté (ici le serveur de sessions d'utilisateurs SS) et dédiée à une conférence multimédia entre au moins deux terminaux de communication Ti dits internes.

Plus précisément, le module de gestion MG est tout d'abord chargé d'effectuer des connexions de flux multimédia entre les terminaux internes à la session principale établie. Il est également chargé d'identifier chaque terminal externe à la session principale qui tente d'établir une communication parallèle avec l'un au moins des terminaux internes à cette session principale, puis d'établir, à la demande de l'intervenant externe dont il a identifié le terminal, une communication parallèle entre le terminal externe identifié et chaque terminal interne demandé afin que ce terminal externe puisse échanger des flux multimédia avec l'un au moins des terminaux internes dans le cadre d'une session multimédia parallèle en mode conférence.

En d'autres termes, le module de gestion MG est chargé, une fois qu'il a établi une session principale de conférence multimédia, d'établir une session parallèle multimédia entre un terminal externe et au moins un terminal interne à la session principale, puis d'établir une jonction entre les sessions principale et parallèle.

Pour ce faire, le module de gestion MG intervient dans trois niveaux du réseau R : le niveau session d'utilisateurs (contrôlé par le serveur de sessions d'utilisateurs SS, dans lequel il est ici implanté), le niveau de gestion du réseau (qui contrôle l'établissement des différents média impliqués dans les sessions) et le niveau de connectivité média (contrôlé par le serveur de conférence SC).

Le dispositif D agit pendant toute la durée de la session principale à laquelle il est associé. Il récupère tous les événements liés à la conférence, comme par exemple le départ ou l'arrivée d'un participant. Il gère tous les média et est en permanence en attente des requêtes internes et externes qui s'adressent à l'un au moins des participants internes et/ou au terminal externe.

Deux exemples non limitatifs de mise en oeuvre de l'invention vont maintenant être décrits. On considère dans ces deux exemples que les terminaux T1 à T3 requièrent l'établissement d'une session principale de conférence multimédia, et que le dispositif D en a été averti. Le dispositif D se charge alors d'établir les connexions entre les terminaux T1 à T3, le serveur de sessions d'utilisateurs SS et le serveur de conférence SC. Les terminaux T1 à T3 peuvent alors s'échanger des flux de données multimédia en mode conférence (ils sont désormais appelés terminaux internes). Pendant toute la durée de la session, le dispositif D observe si des terminaux externes à la session principale tentent d'établir une communication avec l'un des terminaux internes T1 à T3. Lorsqu'une telle situation survient, le dispositif D identifie le terminal externe demandeur (il s'agit ici du terminal T4), chaque terminal externe demandé et l'objet de la demande de communication (c'est-à-dire la ou les requêtes).

Dans un premier exemple, on considère que le terminal externe T4 veut transmettre des documents multimédia à deux des trois terminaux internes, par exemple T2 et T3 (cela peut éventuellement se faire dans le cadre d'une conférence parallèle entre T2, T3 et T4). A réception de cette requête, le dispositif D établit, par exemple, deux communications parallèles entre le terminal externe T4 et les terminaux internes T2 et T3 (flèche F1 en pointillés), ou bien une session de conférence parallèle (il est préférable de mettre le ou les intervenants internes et l'intervenant externe sur une conférence parallèle (ou secondaire) afin que les ajouts ou les retraits d'autres intervenants internes puissent être effectués dynamiquement). Pour ce faire, le dispositif D agit au niveau des serveur de sessions d'utilisateurs SS et serveur de conférence SC. Une fois ces communications parallèles établies (ou la conférence parallèle établie), le terminal externe T4 peut alors échanger des flux multimédia avec l'un et/ou l'autre des terminaux internes T2 et T3, sans que le terminal T1 ne soit au courant. Les intervenants internes, utilisateurs des terminaux internes T2 et T3, ont la possibilité de contrôler leurs médias afin de sélectionner à chaque instant l'une des conférences afin de n'être entendus que par les terminaux participant à la conférence qu'ils ont sélectionnée [principale (initiale) ou secondaire (parallèle)], par exemple au moyen de fréquences vocales différentes, d'actionneurs (boutons ou touches de clavier) ou d'icônes commandables par une souris.

Dans un second exemple, on considère que le terminal externe T4 transmet une requête signalant qu'il veut intervenir dans la conférence principale par le biais de l'un des trois terminaux internes, par exemple T2. A réception de cette requête, le dispositif D établit alors une communication parallèle entre le terminal externe T4 et le terminal interne T2 (flèche F2 en tirets). Pour ce faire, il agit au niveau des serveur de sessions d'utilisateurs SS et serveur de conférence SC. On notera que dans ce cas la conférence parallèle n'est pas restreinte à T2 et T4, le terminal externe T4 s'ajoute à la conférence principale sans pour autant prendre la place du terminal interne T2. L'utilisateur du terminal externe T4 peut ainsi transmettre un document multimédia au terminal interne T2 qui peut alors le retransmettre à l'un au moins des deux autres terminaux internes T1 et T3. D'une manière générale, les terminaux T1 à T4 peuvent, s'ils le désirent, s'échanger des documents multimédia par le biais de la conférence parallèle (ou secondaire). En d'autres termes, les quatre terminaux T1 à T4 peuvent se partager des documents multimédia.

Bien entendu, de nombreuses autres situations peuvent être envisagées, comme par exemple une conversation multimédia parallèle ou bidirectionnelle, ou l'écoute et seulement l'écoute de l'intervenant externe.

Le dispositif de gestion D peut effectuer un accueil Internet (ou « web ») des intervenants externes afin de leur offrir un choix d'actions possibles, par exemple en fonction des capacités des intervenants et/ou de leurs positions hiérarchiques respectives. Parmi les actions possibles, on peut par exemple citer l'écoute discrète destinée à permettre à un intervenant externe de connaître à chaque instant l'état d'une conférence principale pour y intervenir en cas de besoin, ou bien le transfert par un tiers autorisé d'un nouvel intervenant externe dans une conférence principale.

Le dispositif de gestion D selon l'invention, et notamment son module de gestion MG, peut être réalisé sous la forme de circuits électroniques, de modules logiciels (ou informatiques), ou d'une combinaison de circuits et de logiciels.

L'invention ne se limite pas aux modes de réalisation de dispositif de gestion et d'équipement de réseau décrits ci-avant, seulement à titre d'exemple, mais elle englobe toutes les variantes que pourra envisager l'homme de l'art dans le cadre des revendications ci-après.

## Revendications

1. Dispositif de gestion de connexions de flux multimédia (D), pour un équipement (SS) d'un réseau de communication (R) impliqué dans l'établissement de sessions de communication entre des terminaux de communication (T1-T4) raccordés audit réseau (R), **caractérisé en ce qu'**il comprend des moyens de gestion (MG) agencés, en cas d'établissement d'une session principale de communication impliquant ledit équipement (SS) et dédiée à une conférence multimédia entre au moins deux terminaux de communication dits internes (T1-T3), i) pour effectuer des connexions de flux multimédia entre lesdits terminaux internes (T1-T3), et ii) en cas de tentative d'établissement d'une communication parallèle entre un terminal de communication (T4) externe à la session principale et l'un au moins desdits terminaux (T1-T3) internes à ladite session principale, pour établir chaque communication parallèle entre ledit terminal externe (T4) et chaque terminal interne demandé (T1-T3) de sorte que ledit terminal externe (T4) puisse échanger des flux multimédia avec l'un au moins desdits terminaux (T1-T3) internes à ladite session principale dans le cadre d'une session parallèle.

2. Dispositif selon la revendication 1, **caractérisé en ce que** lesdits moyens de gestion (MG) sont agencés pour effectuer une connexion de flux multimédia entre ledit terminal externe (T4) et l'un (T2) desdits terminaux internes (T1-T3) de sorte que ledit terminal externe (T4) puisse prendre au moins partiellement le contrôle dudit terminal interne (T2).

3. Dispositif selon l'une des revendications 1 et 2, **caractérisé en ce que** lesdits moyens de gestion (MG) sont agencés pour effectuer des connexions de flux multimédia entre ledit terminal externe (T4) et l'un au moins desdits terminaux internes (T1-T3) de sorte qu'ils puissent partager des données représentatives de documents multimédia via ladite session parallèle.

4. Equipement (SS,SC) de réseau de communication (R), propre à participer à l'établissement de sessions de communication entre des terminaux de communication (T1-T4) raccordés audit réseau (R), **caractérisé en ce qu'**il comprend un dispositif de gestion (D) selon l'une des revendications précédentes.

5. Equipement selon la revendication 4, **caractérisé en ce qu'**il est choisi dans un groupe comprenant un serveur de sessions d'utilisateurs et un serveur de conférence.
